# EUROPÄISCHE PATENTSCHRIFT

(11) **EP 1 310 702 B1**
(45) Veröffentlichungstag und Bekanntmachung des Hinweises auf die Patenterteilung: **03.08.2005**
(21) Anmeldenummer: 02024761.5
(22) Anmeldetag: 06.11.2002
(51) Int. Cl.: F16H 25/24, F16D 49/02

(54) **Bremsvorrichtung für eine rotative Antriebsvorrichtung**
Brake device for rotary drive unit
Dispositif de freinage pour entraînement rotatif

(30) Priorität: 07.11.2001 CH 20452001
(43) Veröffentlichungstag der Anmeldung: 14.05.2003
(73) Patentinhaber: AB SKF, S-415 50 Göteborg (SE)
(72) Erfinder: Jehle, Thomas, 79618 Rheinfelden (DE); Matter, Andrea, 4419 Lupsingen (CH); Tschudin, Beat, 4153 Reinach (CH); Vögelin, Martin, 4434 Hölstein (CH)
(74) Vertreter: EGLI-EUROPEAN PATENT ATTORNEYS

(56) Entgegenhaltungen:
- EP-A- 0 662 573
- EP-A- 1 186 800
- US-A- 4 747 320
- US-A- 5 058 445

## Beschreibung

Die Erfindung betrifft eine Bremsvorrichtung zur Übertragung oder Abbremsung von Drehbewegungen um eine Rotationsachse von einer Antriebseite auf eine Abtriebsseite und umgekehrt, wobei die Bremsvorrichtung hierzu mit zumindest zwei Kopplungselementen sowie einer Schraubenfeder versehen ist, wobei jedes der Kopplungselemente zumindest ein Bodenteil aufweist, das entweder mit der Antriebsseite oder mit der Abtriebsseite drehfest wirkverbunden ist. Ferner sind an jedem Kopplungselement entlang einer um die Rotationsachse verlaufenden Umfangslinie des jeweiligen Bodenteils Klauen vorgesehen, die mit Abstand zueinander angeordnet sind, wobei zumindest eine Klaue des einen Kopplungselements zwischen zwei Klauen des anderen Kopplungselements angeordnet ist, und die beiden Kopplungselemente relativ zueinander drehbar sind. Ein vorzugsweise als Umschlingungsfeder ausgebildetes Federelement ist mit zumindest einer der Klauen der Kopplungselemente in Wirkverbindung bringbar, wobei die Wirkverbindung eine Variation einer geometrischen Grösse des Federelements bewirkt und hierdurch das Federelement entweder in Anlage gegen eine Bremsfläche ist oder von letzterer beabstandet wird.

Die Erfindung bezieht sich zudem auf eine Antriebsvorrichtung, die mit einer Bremsvorrichtung versehen ist. Besondere Bedeutung hat die Erfindung insbesondere im Zusammenhang mit Linearantrieben, bei denen eine rotative Antriebsbewegung in eine lineare Nutzbewegung umgewandelt wird, wie dies beispielsweise bei Antrieben für Betten, Patientenbetten, sowie bei weiteren medizinaltechnischen oder Industrie-Anwendungen oftmals vorgesehen ist.

Derartige, im Oberbegriff von Anspruch 1 umschriebene Vorrichtungen sind auch unter der Bezeichnung Schlingenfederbremsen bekannt, die mit ihren Kopplungselementen auf die in Form einer Schraubenfeder gestalteten Umschlingungsfeder einwirken. Anders als bei Schraubenfedern sonst üblich, soll hier mit der Umschlingungsfeder keine axial wirkende Druck- oder Zugkraft erzeugt bzw. gespeichert werden. Es werden vielmehr in etwa der Wicklungsrichtung der Schraube eingeleitete Kräfte und deren Auswirkungen auf die Feder genutzt.

Wird nämlich ein Drehmoment von einer Seite auf die Schlingenfederbremse aufgebracht, so führt dies zu einer Verkleinerung eines Aussendurchmessers der Umschlingungsfeder, die hierdurch mit Abstand zu einem Gehäuse angeordnet ist. Wird das Drehmoment jedoch von der anderen Seite aufgebracht, so wird der Aussendurchmesser geweitet. Die Feder liegt dann mit ihrer Aussenfläche gegen eine Bremsfläche des Gehäuses an und bremst die Drehbewegung sehr abrupt ab. Als Folge hiervon kann eine von dieser Seite eingeleitete Drehbewegung sofort gestoppt bzw. gebremst werden. Eine solche Bremsvorrichtung wird deshalb auch dazu eingesetzt, bei rotatorischen Antriebsbewegungen eine Art Selbsthemmung zu erzielen, mit der beispielsweise ein von einer Abtriebsseite her eingeleitete Drehbewegung unterbunden werden kann.

So ist es insbesondere im Zusammenhang mit auf Spindeln ohne Selbsthemmung basierenden Linearantrieben, beispielsweise Kugelumlaufspindeln, bekannt, eine solche Schlingenfederbremse einzusetzen. Es kann damit verhindert werden, dass eine auf der Abtriebsseite auf die Kugelumlaufspindel einwirkende Last ein sogenanntes Ablaufen des Antriebes bewirkt. Die Schlingenfederbremse wirkt diesem durch das als Bremse wirkende Reibmoment zwischen der Feder und der Bremsfläche entgegen.

Es kann jedoch hierbei nicht zufrieden stellen, dass die Schlingenfederbremse in axialer Richtung des Antriebes eine erhebliche Baugrösse aufweist, die in dieser Richtung zu einer grossen Länge des gesamten Antriebs führt. Die Länge der beiden in der Regel mit einer zylindrischen Form versehenen und mit ihren Klauen ineinander geschobenen Kopplungsteile addiert sich insgesamt zur Länge des Antriebes. Dies kann bei einigen Anwendungen solcher Antriebe zu Platzproblemen führen.

Aus der US-A-5 058 445 wird eine rotative Antriebsvorrichtung, die ursprünglich schon aus der US-A-4 4 747 320 bekannt war, mit einer Bremseinrichtung ausgerüstet. Allerdings sind die beiden Kopplungselemente bei der US-A-5 058 445 als rohrartige Elemente ausgebildet und weisen daher in Bezug auf die gewünschte Verringerung der Baugrösse in die falsche Richtung.

Die nachveröffentliche EP 1186 800 A offenbart eine Bremsvorrichtung gemäß dem Oberbegriff des Anspruchs 1.

Der Erfindung liegt deshalb die Aufgabe zugrunde eine gattungsgemässe Bremsvorrichtung so weiterzubilden, dass unter Beibehaltung von deren Funktionalität eine Verringerung der Baulänge möglich wird.

Diese Aufgabe wird bei einer Vorrichtung der eingangs genannten Art erfindungsgemäß dadurch gelöst, dass die Klauen des ersten Kopplungselementes zwischen sich eine Öffnung freigeben, in die das zweite Kopplungselement mit seinem scheibenformigen Bodenteil einführbar ist, und beide Kopplungselemente in Richtung der Rotationsachse, an ihren, dem scheibenformigen Bodenteil gegenüberliegenden, Enden jeweils mit einer Öffnung versehen sind, durch die beide Kopplungselemente einen von der den scheibenförmigen Bodenteilen gegenüberliegenden Seite der Bremsvorrichtung zugänglichen Hohlraum ausbilden.

Im Gegensatz zur herkömmlichen Anordnung der Kopplungsteile, wird erfindungsgemäss eines der beiden Kopplungsteile um 180° gedreht und mit seinem scheibenförmigen Bodenteil voraus in das andere Kopplungsteil eingeschoben. Durch diese konstruktive Massnahme ist es möglich, die beiden Kopplungselemente mit ihren scheibenförmigen Bodenteilen möglichst nahe aneinander anzuordnen. Vorzugsweise liegen sie mit ihren scheibenförmigen Bodenteilen aneinander an. Die beiden Kopplungsteile sind an ihren, den scheibenförmigen Bodenteilen gegenüberliegenden, Enden jeweils mit einer Öffnung versehen, durch die ein Bauteil des Antriebs in die Kopplungselemente eingeführt werden kann. Dies ermöglicht eine erhebliche Verringerung der Baulänge in axialer Richtung der Antriebsbewegung, obwohl die primär mit der Vorrichtung erzielbare Wirkung, nämlich eine Selbsthemmung zu erreichen, vollständig beibehalten werden kann. Anders als bei herkömmlichen gattungsgemässen Bremsvorrichtungen addiert sich bei erfindungsgemässen Bremsvorrichtungen die Baulänge der Kopplungselemente nicht vollständig zur Gesamtbaulänge der Antriebsvorrichtung. Mit erfindungsgemässen Bremsvorrichtungen lassen sich somit - in Bezug auf die Richtung der Rotationsachse - kleinere Einbaumasse erzielen.

In einer bevorzugten Ausführungsform geben die Klauen des zweiten Kopplungselementes, die auch in Form einer Wand ausgebildet sein können, eine Öffnung frei, in die ein Bauteil eines Antriebs, insbesondere ein auf der Welle angeordnetes Bauteil, eingeschoben sein kann. Die Klauen bzw. zylindrischen Wände beider Kopplungsteile sollten somit um die vorgesehene Rotationsachse genügend freien Raum lassen, um ein Bauteil des Antriebs einführen bzw. dort anordnen zu können. Damit kann die Länge der Bremsvorrichtung, die zu einer Verlängerung eines erfindungsgemässen Antriebes führt, im Wesentlichen auf eine Erstreckungsrichtung der Bodenteile in Richtung der Rotationsachse oder weniger beschränkt werden. Gegenüber herkömmlichen gattungsgemässen Bremsvorrichtungen können hierdurch Reduzierungen der Baulängen um zumindest die Hälfte der bisherigen Baulänge erreicht werden.

Ist ein bestimmter Durchmesser oder eine bestimmte Querschnittsfläche der Bremsvorrichtung vorgegeben, so lässt sich eine Optimierung der Querschnittsgrösse des zugänglichen Volumens erreichen, wenn die Öffnungen beider Kopplungselemente im Wesentlichen gleich groß sind.

Eine konstruktiv einfache und mit relativ wenig Aufwand herstellbare und montierbare bevorzugte Ausführungsform einer erfindungsgemässen Bremsvorrichtung sieht bei beiden Kopplungselementen mehrere, gleichmässig an einer (imaginären) Umfangslinie verteilte Klauen vor. Die Klauen sollten parallel zur Rotationsachse ausgerichtet sein.

Das zweite Kopplungselement lässt sich einerseits gut in das erste Kopplungsteil einführen, wenn ein grösster Abstand der Aussenfläche des Bodenteils zur Rotationsachse kleiner ist als ein kleinster Abstand einer Innenfläche der Wand des ersten Kopplungselements zur Rotationsachse. Um andererseits auf konstruktiv möglichst einfache Weise ein Eingreifen der beiden Wände im Bereich von Durchbrüchen zu erzielen, sollte auch eine Aussenfläche der Wand des zweiten (eingeschobenen) Kopplungselementes einen grösseren Abstand zur vorgesehenen Rotationsachse aufweisen, als der grösste Abstand einer Aussenfläche des Bodenteils des zweiten Kopplungselementes. Mit anderen Worten, die sich vorzugsweise aus Klauen zusammensetzende Wand des zweiten Kopplungselements hat zur Rotationsachse vorzugsweise einen grösseren Abstand als der Bodenteil.

Besondere Vorteile lassen sich mit der Erfindung im Zusammenhang mit Antriebsvorrichtungen erzielen, bei denen eine Drehbewegung einer Antriebswelle in eine geradlinige Verschiebebewegung transformiert wird. Hierzu kann beispielsweise die Welle auf ihrer Abtriebsseite mit einem Gewinde versehen sein auf der sich eine Spindelmutter bewegt. Die Spindelmutter kann in Bezug auf die Rotationsbewegungen fixiert sein, was dann bei Drehbewegungen der Spindel zu einer geradlinigen Verschiebung der Spindelmutter führt. Ein auf der Spindelmutter befestigtes Schubrohr führt somit geradlinige translatorische Bewegungen aus. Mit der Erfindung ist es nun möglich, das Schubrohr in die Kupplungsvorrichtung, d.h. in die beiden Kopplungselemente, einzufahren. Eine Querschnittsfläche des Schubrohres und Querschnittsflächen der Öffnungen der Kopplungselemente sollten hierzu in Bezug auf ihre Formen und Grössen so gestaltet sein, dass eine solche Einführung möglich ist.

In einer bevorzugten Ausführungsform kann vorgesehen sein, dass die beiden scheibenförmigen Bodenteile aneinander anliegen und das Schubrohr bis unmittelbar vor die scheibenförmigen Bodenteile eingeführt werden kann. Hiermit kann in besonders starkem Masse eine Verkürzung der Baulänge erreicht werden, da sich von der Bremsvorrichtung im Wesentlichen nur die Dicke der beiden scheibenförmigen BBodenteile zur Baulänge des Antriebes addiert.

Weitere bevorzugte Ausgestaltungen der Erfindung ergeben sich aus den Ansprüchen und den Zeichnungen.

Die Erfindung wird anhand eines in den Figuren rein schematisch dargestellten Ausführungsbeispiels näher erläutert, es zeigen:
- Fig. 1: eine stark schematisierte Darstellung einer erfindungsgemässen Antriebsvorrichtung;
- Fig. 2: eine perspektivische Längsschnittdarstellung einer erfindungsgemässen Bremsvorrichtung und einem Teil der Antriebsvorrichtung aus Fig. 1;
- Fig. 3: einen Ausschnitt aus Fig. 2 in einer zweidimensionalen Darstellung;
- Fig. 4: eine perspektivische Darstellung von einer Abtriebsseite auf die Bremsvorrichtung.
- Fig. 5a: ein Schubrohr der Antriebsvorrichtung aus Fig. 1 in einer ersten Endlage;
- Fig. 5b: das Schubrohr aus Fig. 1 und Fig. 5a in einer zweiten Endlage.

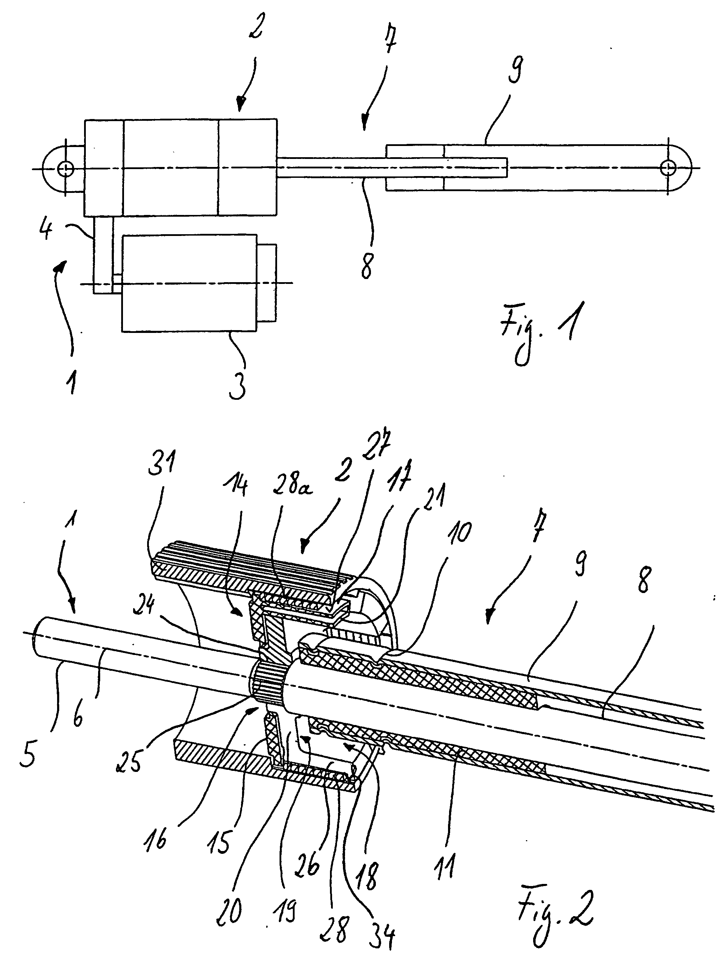

Der im Ausführungsbeispiel von Fig. 1 gezeigte Linearantrieb weist auf einer Antriebsseite 1 einer Bremsvorrichtung 2 einen Rotations-Elektromotor 3 auf. Dessen Antriebsbewegung wird über einen Riementrieb 4 auf eine Antriebswelle 5 (Fig. 2) übertragen, die um eine Rotationsachse 6 drehbar ist. Auf einer Abtriebsseite 7 der Bremsvorrichtung 2 ist eine mit einem nicht näher dargestellten Gewinde (beispielsweise einem Trapezgewinde) versehene Spindel 8 angeordnet. Die Spindel 8 und die Antriebswelle 5 weisen eine gemeinsame Rotationsachse 6 auf. Im dargestellten Ausführungsbeispiel sind die Spindel 8 und die Welle 5 relativ zueinander um die Rotationsachse 6 verdrehbar.

Ferner ist konzentrisch und mit Abstand um die Spindel ein Schubrohr 9 vorgesehen. Das Schubrohr 9 ist durch in Umfangsrichtung verlaufende Einrollungen 10 mit einer Kunststoff-Spindelmutter 11 wirkverbunden. Die Spindelmutter 11 wiederum ist mit einem nicht näher dargestellten Gewinde versehen, das in dem Gewinde der Spindel 8 - ohne Selbsthemmung - gelagert und geführt ist. Eine Rotationsbewegung der Spindel 8 führt zu einer geradlinigen Bewegung der Spindelmutter 11, die diese translatorische Bewegung auf das Schubrohr 9 überträgt. Derartige, vorliegend auf der Abtriebsseite 7 der Bremsvorrichtung 2 angeordnete - und als Getriebe wirkende - Linearantriebe sind an sich mannigfach bekannt, z.B. auch in Form von Kugelumlaufmuttern.

Die Bremsvorrichtung 2 weist ein erstes Kopplungselement 14 auf, das mit einem in etwa kreisrunden flächigen Bodenteil 15 versehen ist. Der scheibenförmige Bodenteil 15 hat eine Erstreckungsrichtung (Dicke) die im Wesentlichen senkrecht zur Rotationsachse 6 ausgerichtet ist. Zur Durchführung der Welle weist der Bodenteil 15 im Bereich der Rotationsachse 6 eine Ausnehmung 16 auf. Die Welle 5 ist in einer nicht näher dargestellten Weise mit dem ersten Kopplungselement 14 in Bezug. auf Rotationsbewegungen formschlüssig verbunden.

Im Bereich des äusseren Umfangs des Bodenteils 15 sind mehrere, mit Abstand zueinander angeordnete Klauen 17 einstückig mit dem Bodenteil 15 verbunden. Die Klauen 17 weisen eine Längserstreckung auf, die parallel zur Rotationsachse 6 ausgerichtet ist. Die Klauen 17 können als Teil einer Wand eines (imaginären) Hohlzylinders gesehen werden, deren Symmetrieachse die Rotationsachse 6 ist. Die Klauen 17 geben somit einen im Querschnitt kreiszylindrischen Hohlraum 18 zwischen sich frei, der von der Abtriebsseite 7 offen ist.

Ein zweites Kopplungselement 19 ist prinzipiell gleich gestaltet, wie das erste Kopplungselement 14. Auch das zweite Kopplungselement 19 weist einen kreisrunden flächigen Bodenteil 20 auf. Dessen Grösse ist in Bezug auf Richtungen senkrecht zur Rotationsachse 6 so gewählt, dass der Bodenteil 20 zwischen den Klauen 17 des ersten Kopplungselements 14 von der offenen Stirnseite 21 des ersten Kopplungselements 14 eingeführt und in eine flächige Anlage gegen den Bodenteil 15 des ersten Kopplungselements gebracht werden kann.

Der Bodenteil 20 des zweiten Kopplungselementes 19 weist im Bereich der Rotationsachse 6 ebenfalls eine Ausnehmung auf. Eine Begrenzungswand dieser Ausnehmung ist mit einer Verzahnung 24 versehen, die mit einer entsprechenden Verzahnung 25 der Spindel 8 kämmt. Damit kann eine rotatorische Verbindung zwischen dem zweiten Kopplungselement 19 und der Abtriebsseite 7, d.h. der Spindel 8, hergestellt werden.

Am zweiten Kopplungselement 19 sind die gleiche Anzahl an voneinander beabstandeten Klauen 26 angeordnet, wie beim ersten Kopplungselement 14. Auch hier sind die Klauen in Form von Abschnitten einer hohlzylindrischen kreisförmigen Wand ausgebildet. Die Klauen 26 sind in Umfangsrichtung der Wand im Wesentlichen gleichförmig verteilt. Ein Abstand von aufeinander folgenden Klauen 26 des zweiten Kopplungselementes 19 ist dabei grösser, als eine Erstreckungslänge einer der Klauen 17 des ersten Kopplungselements 14, ebenfalls bezogen auf die Umfangsrichtung der Wand. Damit kann im montierten Zustand der Bremsvorrichtung jeweils eine Klaue 17, 26 des einen Kopplungselementes 14, 19 zwischen zwei Klauen 17, 26 des anderen Kopplungselementes 14, 19 angeordnet werden. Die in Umfangsrichtung aufeinander folgenden Klauen 17, 26 beider Kopplungselemente 14, 19 sind hierbei jeweils zueinander beabstandet.

Auch die ineinander montierten Kopplungselemente 14, 19 geben somit den näherungsweise zylindrischen Hohlraum 18 (Volumen) frei, der sich von dem Bodenteil 20 des zweiten Kopplungselementes 19 bis zu den Stirnseiten 21 der freien Enden der Klauen 17, 26 erstreckt. Von den Enden der Streben her ist somit dieser Hohlraum 18 über seinen gesamten Querschnitt zugänglich.

Im Bereich von Aussenflächen 27 der Klauen ist eine als Bremsfeder fungierende und in Form einer Schraubenfeder 28 gestaltete Umschlingsfeder angeordnet. Die Schraubenfeder 28 ist dabei mit einer geringen Steigung gewickelt, so dass aufeinander folgende Windungen sehr nahe beieinander liegen, nach Möglichkeit aneinander anliegen.

Eine Länge der Schraubenfeder 28 in Richtung der Rotationsachse 6 entspricht etwa der Länge der Klauen 17, 26. Somit befindet sich eines der Enden der Schraubenfeder 28 im Bereich der Bodenteile 15, 20 und das andere Ende im Bereich der Stirnseite 21 der Klauen 17, 26. Hierbei ist jedes der beiden Enden 29, 30 der Schraubenfeder 28 in Richtung auf das Volumen umgebogen und zwischen jeweils zwei Klauen 17, 26 der beiden Kopplungselemente 14, 19 eingeführt, wie u.a. aus Fig. 4 hervorgeht. Die beiden Enden 29, 30 wirken als Mitnehmer und können - wie nachfolgend noch näher zu erläutern ist - durch eine Drehbewegung der Kopplungselemente 14, 19 in Anlage gegen Seitenflächen 17a, 26a von Klauen 17, 26 gelangen.

Sowohl die Kopplungselemente 14, 19, als auch die Schraubenfeder 28 befinden sich in einem hohlzylindrischen Gehäuse 31 (Fig. 2). Eine Innenfläche 34 des Gehäuses 31 ist entweder mit keinem oder nur mit geringem Abstand zu einer sich durch die Windungen ergebenden Aussenfläche 28a der Schraubenfeder 28 angeordnet.

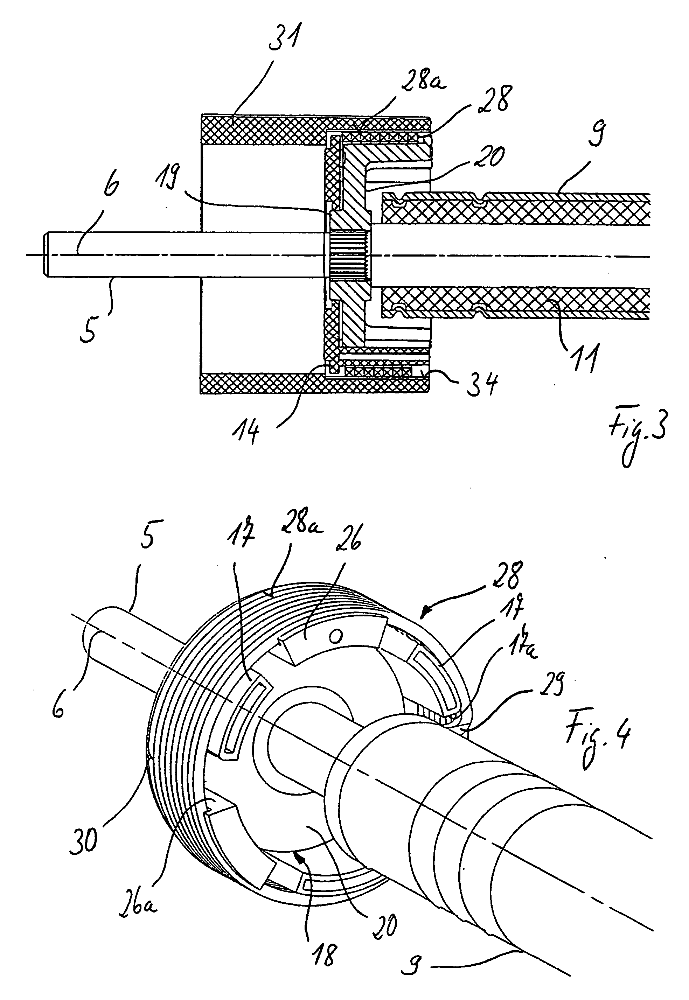

Eine Antriebsbewegung des Elektromotors in eine erste Drehrichtung wird somit von der Welle 5 über die nicht näher dargestellte formschlüssige Verbindung auf das erste Kopplungselement 14 übertragen. Dieses drückt mit einer Seitenfläche 17a seiner Klauen 17 gegen den, beispielsweise in Fig. 4 dargestellten, Mitnehmer 29. Die Schraubenfeder liegt zu diesem Zeitpunkt noch mit ihrer Aussenfläche 28a an der Innenfläche 34 des Gehäuses an (Fig. 3). Hierdurch wird auf die Schraubenfeder 28 in Umfangsrichtung eine Zugkraft aufgebracht. Da die beiden Kopplungselemente 14, 19 in einem durch die Klauen vorgegebenen Masse relativ zueinander um die Rotationsachse 6 drehbar sind, führt die Zugkraft zu einer zumindest geringen Verkleinerung des Durchmessers der Schraubenfeder 28. Idealerweise wird damit die Aussenfläche 28a der Schraubenfeder zumindest nahezu vollständig von der als Bremsfläche fungierenden Innenfläche 34 des Gehäuses 31 entfernt bzw. gelöst. Die Antriebsbewegung des Elektromotors wird somit nicht, bzw. höchstens nur geringfügig, durch eine Reibung zwischen der Aussenfläche 28a der Schraubenfeder 28 und der Bremsfläche 34 des Gehäuses 31 gebremst oder anderweitig beeinflusst.

Bei einer Antriebsbewegung des Motors 3 in die andere Drehrichtung drückt eine der Klauen 17 ebenfalls von innen, jedoch gegen den Mitnehmer 30, der sich im Bereich der Bodenteile befindet. Da sich das über die Verzahnungen 24, 25 mit der Spindel 8 verbundene zweite Kopplungselement 19 auch in diesem Fall gegenüber dem ersten Kopplungselement 14 maximal soweit rotatorisch drehen lässt, bis Klauen der beiden Kopplungselemente aneinander anstossen, kann hierdurch die Schraubenfeder 28 zumindest geringfügig zusammengezogen werden. Ihr Durchmesser verkleinert sich, wodurch sichergestellt wird, dass die Aussenfläche 28a nicht, höchstens geringfügig, mit der Bremsfläche 34 in Kontakt kommt. Als Folge hierdurch wird die Antriebsbewegung durch die Bremsvorrichtung nicht beeinflusst.

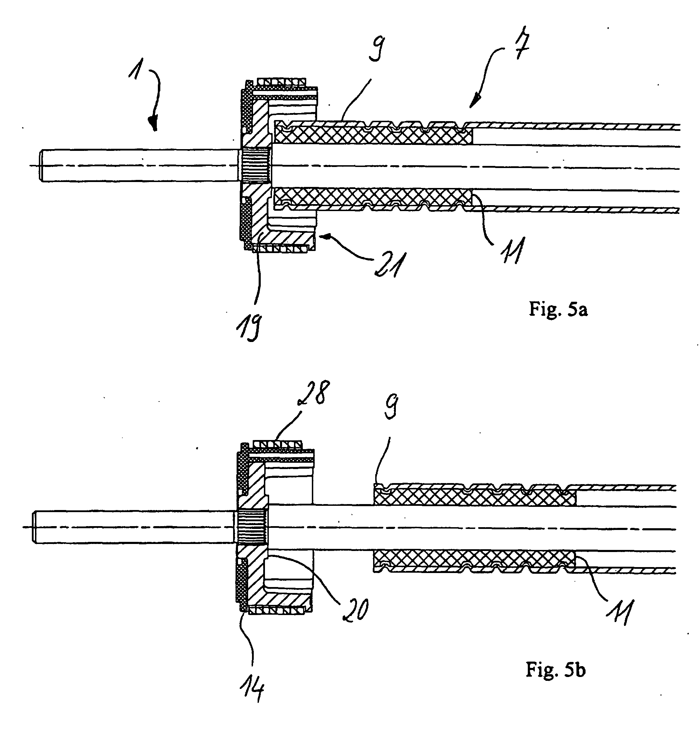

Mit einer der beiden Drehrichtungen kann eine maximale Ausfahrlänge des Schubrohres 9 und mit der hierzu entgegengesetzen Drehrichtung die u.a. in Fig. 2 und Fig. 3 gezeigte geringste Länge der erfindungsgemässen Antriebsvorrichtung erzielt werden. Die beiden in diesem Ausführungsbeispiel erreichbaren Endlagen sind zudem in den Fig. 5a und 5b gegenüber gestellt. Wie insbesondere Fig. 3 und Fig. 5a entnommen werden kann, befindet sich ein Ende des Schubrohrs 9 unmittelbar gegenüber dem Bodenteil 20 des zweiten Kopplungselements 19, wenn die Antriebsvorrichtung ihre Position mit der geringsten Länge einnimmt. Das Schubrohr 9 ist somit mit diesem Ende in den von den beiden Kopplungselementen zwischen den Bodenteilen 15, 20 und den Stirnseiten 21 der Strebe 17, 26 freigegebenen Hohlraum 18 eingefahren. Dies ermöglicht den erfindungsgemässen Antrieb vergleichsmässig kurz auszubilden.

Die Bremsvorrichtung wirkt hingegen dann als Bremse, wenn von der Abtriebsseite 7, im vorliegenden Ausführungsbeispiel von der Seite des Schubrohrs 9, eine Vorschubbewegung aufgrund einer dort eingeleiteten Kraft oder einem Drehmoment auf die Antriebsvorrichtung wirkt. Dieses Ereignis löst eine Drehbewegung der Spindel 8 aus und damit auch eine Drehbewegung des zweiten Kopplungselements 19, welches über die Verzahnung 24, 25 mit der Spindel 8 verbunden ist.

Somit drückt eine Klaue 26 des zweiten Kopplungselements 19 gegen eine äussere Seite von einem der beiden Mitnehmer 29, 30. Die relative Rotationsbewegung zwischen dem ersten und dem zweiten Kopplungselement 14, 19 hat dann eine in Umfangsrichtung der Schraubenfeder 28 wirkende Druckkraft zur Folge. Diese führt wiederum zu einer zumindest geringfügigen Vergrösserung des Durchmessers der Schraubenfeder 28, d.h. zu deren Aufweitung. Als Folge hiervon kommt bzw. bleibt die Aussenfläche 28a der Schraubenfeder 28 in Anlage gegen die Innenfläche 34 (Bremsfläche) des Gehäuses 31. Das hierdurch erzeugte Bremsmoment wirkt dem die Drehbewegung auslösenden Ereignis entgegen und stoppt die von der Abtriebseite 7 her eingeleitete Drehbewegung sofort.

Dieser Vorgang läuft ab, gleich mit welcher Drehrichtung auf der Abtriebseite 7 die Drehbewegung erzeugt wird. Unterschiedliche Drehrichtungen haben lediglich eine Vertauschung der Mitnehmer 29, 30 zur Folge, gegen die eine der Klauen 26 drückt und hierdurch eine Aufweitung des Durchmessers der Schraubenfeder 28 erzeugt.

In einem nicht dargestellten weiteren Ausführungsbeispiel kann die antriebsseitige Drehbewegung auch direkt in das erste Kopplungselement 14 eingeleitet werden, das auch in diesem Fall um die Rotationsachse 6 drehbar ist. Hierzu kann beispielsweise vorgesehen sein, das Kopplungselement 14 als Bestandteil eines auf der Antriebsseite 1 angeordneten Zahnradgetriebes auszubilden. Um weiterhin relative Drehbewegungen zwischen dem ersten Kopplungselement 14 und dem zweiten Kopplungselement zu ermöglichen, kann das erste Kopplungselement beispielsweise mittels einem Wälzkörperlager auf der Welle 5 gelagert sein. Somit sind auch erfindungsgemässe Ausführungsformen möglich, bei denen die Welle 5 auf der Antriebsseite 1 und die Spindel 8 der Abtriebsseite 7 zueinander drehfest ausgestaltet sind.

### Bezugszeichenliste

- 1: Antriebsseite
- 2: Bremsvorrichtung
- 3: Elektromotor
- 4: Riementrieb
- 5: Welle
- 6: Rotationsachse
- 7: Abtriebsseite
- 8: Spindel
- 9: Schubrohr
- 10: Einrollung
- 11: Spindelmutter
- 14: 1. Kopplungselement
- 15: Bodenteil
- 16: Ausnehmung
- 17: Klaue
- 17a: Seitenfläche
- 18: Hohlraum
- 19: 2. Kopplungselement
- 20: Bodenteil
- 21: Stirnseite
- 24: Verzahnung
- 25: Verzahnung
- 26: Klaue
- 26a: Seitenfläche
- 27: Aussenfläche
- 28: Schraubenfeder
- 28a: Aussenfläche
- 29: Ende (Mitnehmer)
- 30: Ende (Mitnehmer)
- 31: Gehäuse
- 34: Innenfläche

## Patentansprüche

1. Bremsvorrichtung (2) zur Übertragung oder Abbremsung von Drehbewegungen um eine Rotationsachse (6) von einer Antriebseite (1) auf eine Abtriebsseite (7) und umgekehrt, wobei die Bremsvorrichtung (2) hierzu mit
zumindest zwei Kopplungselementen (14, 19) sowie einer Schraubenfeder (28) versehen ist, wobei
jedes der Kopplungselemente (14, 19) zumindest ein scheibenförmiges Bodenteil (15, 20) aufweist, das entweder mit der Antriebsseite (1) oder mit der Abtriebsseite (7)drehfest wirkverbunden ist, ferner
an jedem Kopplungselement (14, 19) entlang einer um die Rotationsachse (16) verlaufenden Umfangslinie des jeweiligen scheibenförmigen Bodenteils (15, 20) Klauen (17, 26) vorgesehen sind, die mit Abstand zueinander angeordnet sind, wobei zumindest eine Klaue (17, 26) des einen Kopplungselements (14, 19) zwischen zwei Klauen (26, 17) des anderen Kopplungselements (19, 14) angeordnet ist,
die beiden Kopplungselemente (14, 19) relativ zueinander drehbar sind,
ein Federelement mit zumindest einer der Klauen (17, 26) der Kopplungselemente (14, 19) in Wirkverbindung bringbar ist, wobei die Wirkverbindung eine Variation einer geometrischen Grösse des Federelements bewirkt und hierdurch das Federelement entweder in Anlage gegen eine Bremsfläche ist oder von letzterer beabstandet wird,
**dadurch gekennzeichnet, dass**
die Klauen (17, 26) des ersten Kopplungselementes (14, 19) zwischen sich eine Öffnung freigeben, in die das zweite Kopplungselement (14, 19) mit seinem scheibenförmigen Bodenteil (15, 20) einführbar ist, und
beide Kopplungselemente (14, 19), in Richtung der Rotationsachse (6), an ihren dem scheibenförmigen Bodenteil (15, 20) gegenüberliegenden Enden jeweils mit einer Öffnung versehen sind, durch die beide Kopplungselemente (14, 19) einen von der den scheibenförmigen Bodenteilen (15, 20) gegenüberliegenden Seite der Bremsvorrichtung (2) zugänglichen Hohlraum (18) ausbilden.

2. Bremsvorrichtung nach Anspruch 1, **dadurch gekennzeichnet, dass** zur Ausbildung von Klauen (17, 26) bei zumindest einem der beiden Kopplungselemente (14, 19) eine näherungsweise zylindrische Wand vorgesehen ist, in die zur Anordnung einer Klaue des anderen Kopplungselements (14, 19) zumindest eine Nut ausgebildet ist.

3. Bremsvorrichtung nach Anspruch 1 oder 2, **dadurch gekennzeichnet, dass** die Öffnungen beider Kopplungselemente (14, 19) im Wesentlichen gleich groß sind.

4. Bremsvorrichtung nach einem der vorhergehenden Ansprüche, **dadurch gekennzeichnet, dass** eine Aussenfläche einer Klaue (17, 26) des zweiten Kopplungselementes (14, 19) einen grösseren Abstand zur vorgesehenen Rotationsachse (6) aufweist, als ein grösster Abstand einer Aussenfläche des scheibenförmigen Bodenteils (15, 20) des zweiten Kopplungselementes (14, 19).

5. Bremsvorrichtung nach einem der vorhergehenden Ansprüche, **dadurch gekennzeichnet, dass** der zugängliche Hohlraum (18) sich von einem stirnseitigen Ende von zumindest einer der Klauen (17, 26) bis zu einem der beiden scheibenförmigen Bodenteile (15, 20) erstreckt.

6. Bremsvorrichtung nach einem der vorhergehenden Ansprüche, **dadurch gekennzeichnet, dass** ein Querschnitt des Hohlraumes (18) in Richtung der Rotationsachse (6) im Wesentlichen konstant ist.

7. Bremsvorrichtung nach einem der vorhergehenden Ansprüche, **dadurch gekennzeichnet, dass** beide scheibenförmigen Bodenteile (15, 20) mit einer Ausnehmung versehen sind, die zur Durchführung einer Welle (5) vorgesehen sind.

8. Antriebsvorrichtung, die einen Antrieb zur Erzeugung einer rotativen Antriebsbewegung einer Welle (5) sowie ein mit der Welle wirkverbundenes Getriebe aufweist, und ferner mit einer Bremsvorrichtung (2) versehen ist, die eine von der Seite des Getriebes eingeleitete Drehbewegung abbremst, vorzugsweise hemmt, **gekennzeichnet durch** eine Bremsvorrichtung (2) nach einem der Ansprüche 1 bis 7.

9. Antriebsvorrichtung nach Anspruch 8, **gekennzeichnet durch** ein Getriebe, mit dem die rotative Antriebsbewegung in eine translatorische Bewegung transformierbar ist, wobei zur Ausführung der translatorischen Bewegung ein Getriebeglied vorgesehen ist, das in den Hohlraum (28) einführbar ist.

10. Antriebsvorrichtung nach Anspruch 9, **dadurch gekennzeichnet, dass** in einer Endlage des Getriebegliedes sich dessen Stirnseite innerhalb des Hohlraums unmittelbar gegenüber den beiden in Richtung der Rotationsachse hintereinander angeordneten scheibenförmigen Bodenteilen (15, 20) befindet.

11. Antriebsvorrichtung nach Anspruch 9 oder 10, **gekennzeichnet durch** ein auf der Welle (5) angeordnetes, geradlinig verschiebbares Schubrohr, das über eine auf der Welle (5) angeordnete Gewindemutter mit dem Antrieb wirkverbunden ist.

## Claims

1. A brake device (2) for transmitting or decelerating rotational movements about an axis of rotation (6) from a drive side (1) to an output side (7) and vice versa, whereby the brake device (2) is to this end
provided with at least two coupling elements (14, 19) and a helical spring (28), whereby
each of the coupling elements (14, 19) has at least one disk-shaped bottom part (15, 20) which is operationally connected in a rotationally fixed manner to either the drive side (1) or the output side (7); furthermore
claws (17, 26) provided on each coupling element (14, 19) along a circumferential line of the respective disk-shaped bottom part (15, 20) running around the axis of rotation (6) are arranged with a spacing between them, at least one claw (17, 26) of one coupling element (14, 19) being arranged between two claws (26, 17) of the other coupling element (19, 14),
the two coupling elements (14, 19) are rotatable in relation to one another,
a spring element can be brought into operative connection with at least one of the claws (17, 26) of the coupling elements (14, 19), whereby the operative connection causes a variation in the geometric size of the spring element, so that the spring element is either in contact with at a distance from a brake face,
**characterized in that**
the claws (17, 26) of the first coupling element (14, 19) form an opening between them into which the second coupling element (14, 19) can be inserted with its disk-shaped bottom part (15, 20), and
the two coupling elements (14, 19) are each provided with an opening on their ends that are opposite the disk-shaped bottom part (15, 20) in the direction of the axis of rotation (6), so that the two coupling elements (14, 19) form a hollow space (18) which is accessible from the side of the brake device (2) opposite the disk-shaped bottom parts (15, 20).

2. The brake device according to claim 1, **characterized in that** an approximately cylindrical wall is provided to form the claws (17, 26) on at least one of the two coupling elements (14, 19), at least one groove being provided in the cylindrical wall for the arrangement of a claw of the other coupling element (14, 19).

3. The brake device according to claim 1 or 2, **characterized in that** the openings of the two coupling elements (14, 19) are essentially the same in size.

4. The brake device according to anyone of the preceding claims, **characterized in that** an outside surface of one claw (17, 26) of the second coupling element (14, 19) is a greater distance away from the intended axis of rotation (6) than the greatest distance of an outside surface of the disk-shaped bottom part (15, 20) of the second coupling element (14, 19).

5. The brake device according to any one of the preceding claims, **characterized in that** the accessible hollow space (18) extends from an end face of at least one of the claws (17, 26) to one of the two disk-shaped bottom parts (15, 20).

6. The brake device according to any one of the preceding claims, **characterized in that** a cross section of the hollow space (18) is essentially constant in the direction of the axis of rotation (6).

7. The brake device according to any one of the preceding claims, **characterized in that** both disk-shaped bottom parts (15, 20) are provided with a recess, these recesses being provided to allow the passage of a shaft (5).

8. A drive device having a drive for generating a rotational driving motion of a shaft (5) and a transmission that is operatively connected to the shaft and also having a brake device (2) which decelerates a rotational movement initiated on the part of the transmission, preferably inhibiting it, **characterized by** a brake device (2) according to any one of claims 1 through 7.

9. The drive device according to claim 8, **characterized by** a transmission with which the rotational drive movement can be transformed into a translational movement, whereby a transmission element which can be inserted into the hollow space (28) is provided for execution of the translational movement.

10. The drive device according to claim 9, **characterized in that** in an end position of the transmission element, its end face inside the hollow space is directly opposite the two disk-shaped bottom parts (15, 20) which are arranged one behind the other in the direction of rotation of the axis.

11. The drive device according to claim 9 or 10, **characterized by** a linearly displaceable pushing tube which is arranged on the shaft (5) and is operatively operatively connected to the drive via a threaded nut situated on the shaft (5).

## Revendications

1. Dispositif de freinage (2) pour la transmission ou le ralentissement de mouvements rotatifs autour d'un axe de rotation (6) d'un côté d'entraînement (1) vers un côté de sortie (7) et inversement, dans lequel le dispositif de freinage (2) est également pourvu de
au moins deux éléments de couplage (14,19) ainsi qu'un ressort à boudin (28), moyennant quoi
chacun des éléments de couplage (14,19) présente au moins une pièce de base en forme de disque (15,20), qui interagit de manière solidaire en rotation soit avec le côté d'entraînement (1), soit avec le côté de sortie (7), en outre
sur chaque élément de couplage (14,19) des crabots (17,26) sont prévus le long d'une ligne circonférentielle s'étendant autour de l'axe de rotation (6) de la pièce de base (15,20) en forme de disque respective, lesquels sont espacés les uns des autres, moyennant quoi au moins un crabot (17,26) d'un des éléments de couplage (14,19) est disposé entre deux crabots (26,17) de l'autre élément de couplage (19,14),
les deux éléments de couplage (14,19) sont tournants rotation relativement l'un à l'autre,
un élément de ressort est amené en interaction avec au moins un des crabots (17,26) de l'élément de couplage (14,19), moyennant quoi l'interaction provoque une variation d'une grandeur géométrique de l'élément de ressort et, par conséquent, l'élément de ressort vient en appui contre une surface de freinage ou est éloigné de cette dernière,
**caractérisé en ce que**
entre les crabots (17,26) du premier élément de couplage (14,19), une ouverture est mise à découvert, dans laquelle le deuxième élément de couplage (14,19) peut s'insérer par sa pièce de base (15,20) en forme de disque, et
les deux éléments de couplage (14,19) sont, dans la direction de l'axe de rotation (6), pourvus à leurs extrémités reposant en vis-à-vis de la pièce de base en forme de disque (15,20) d'une ouverture respective, à travers lesquelles les deux éléments de couplage (14,19) forment un espace creux (18) qui est accessible par le côté du dispositif de freinage (2) opposé aux pièces de base en forme de disque (15,20).

2. Dispositif de freinage selon la revendication 1, **caractérisé en ce que**, afin de former les crabots (17,26) sur au moins un des deux éléments de couplage (14,19) une paroi approximativement cylindrique est prévue, dans laquelle au moins une rainure est réalisée afin de recevoir un crabot de l'autre élément de couplage (14,19).

3. Dispositif de freinage selon la revendication 1 ou 2, **caractérisé en ce que** les ouvertures des deux éléments de couplage (14,19) sont d'une grandeur essentiellement identique.

4. Dispositif de freinage selon une des revendications précédentes, **caractérisé en ce que** une surface externe d'un crabot (17,26) du deuxième élément de couplage (14,19) présente une distance plus grande par rapport à l'axe de rotation (6) prévu qu'une distance la plus grande d'une surface externe de la pièce de base en forme de disque (15,20) du deuxième élément de couplage (14,19).

5. Dispositif de freinage selon une des revendications précédentes, **caractérisé en ce que** l'espace creux (18) accessible s'étend d'une extrémité frontale d'au moins un des crabots (17,26) jusqu'à une des deux pièces de base (15,20) en forme de disque.

6. Dispositif de freinage selon une des revendications précédentes, **caractérisé en ce que** une section transversale de l'espace creux (18) est essentiellement constante dans la direction de l'axe de rotation (6).

7. Dispositif de freinage selon une des revendications précédentes, **caractérisé en ce que** les deux pièces de base en forme de disque (15,20) sont pourvues d'un évidement, évidements qui sont prévu pour recevoir un arbre (5).

8. Dispositif d'entraînement, qui présente un entraînement produisant un mouvement d'entraînement rotatif d'un arbre (5) ainsi qu'une transmission en interaction avec l'arbre, et pourvu en outre d'un dispositif de freinage (2), qui ralentit, de préférence freine un mouvement rotatif initié du côté de la transmission, **caractérisé par** un dispositif de freinage (2) selon l'une des revendications 1 à 7.

9. Dispositif d'entraînement selon la revendication 8, **caractérisé par** une transmission, par laquelle le mouvement d'entraînement rotatif est transformable en un mouvement de translation, dans lequel un élément de transmission est prévu pour exécuter le mouvement de translation, lequel élément peut être inséré dans l'espace creux (28).

10. Dispositif d'entraînement selon la revendication 9, **caractérisé en ce que**, à une position finale de l'élément de transmission, le côté frontal de celui-ci se trouve à l'intérieur de l'espace creux directement en vis-à-vis des deux pièces de base en forme de disque (15,20) disposées l'une derrière l'autre dans la direction de l'axe de rotation.

11. Dispositif d'entraînement selon la revendication 9 ou 10, **caractérisé par** une tige d'extension coulissant en ligne droite, disposée sur l'arbre (5), laquelle interagit avec l'entraînement par l'intermédiaire d'un écrou fileté disposé sur l'arbre (5).
